# FASCICULE DE BREVET EUROPEEN

(11) **EP 2 527 259 B1**
(45) Date de publication et mention de la délivrance du brevet: **03.10.2018**
(21) Numéro de dépôt: 12169047.3
(22) Date de dépôt: 23.05.2012
(51) Int. Cl.: B64G 1/22, B64G 1/50, C09D 5/33, C09D 5/32, C09D 7/61, C08K 3/22

(54) **Pièce de remplacement de réflecteur optique solaire pour satellite**
Replacement part for an optical sun reflector for a satellite
Ersatzteil eines optischen Sonnenreflektors für einen Satelliten

(30) Priorité: 26.05.2011 FR 1101631
(43) Date de publication de la demande: 28.11.2012
(73) Titulaire: Airbus Defence and Space SAS, 31402 Toulouse Cedex 4 (FR)
(72) Inventeur: Dagras, Sabine, 31520 Ramonville (FR); Rieu, Amandine, 31400 TOULOUSE (FR); Guzzoni, Monique, 31570 BOURG ST BERNARD (FR)
(74) Mandataire: Ipside

(56) Documents cités:
- EP-A1- 0 489 531
- EP-A1- 0 681 911
- FR-A1- 2 755 443
- US-A- 5 400 986

## Description

La présente invention relève du domaine des satellites. Elle concerne plus particulièrement les réflecteurs optiques solaires tels qu'utilisés notamment sur des satellites de télécommunications.

### Préambule et art antérieur

Les réflecteurs solaires optiques (OSR de l'anglais "Optical Solar Reflector") sont utilisés sur de nombreux satellites. Leur fonction est de servir de radiateur. Présentés sous forme de carrés de quelques centimètres de côté, ils sont usuellement composés d'une couche supérieure en verre borosilicate, et d'une couche inférieure réfléchissante métallique. La lumière solaire incidente traverse le verre et est réfléchie par la couche métallique. La chaleur du satellite est quant-à-elle émise vers l'espace par le verre qui est un bon émetteur dans l'infrarouge.

L'utilisation des OSR se justifie quand les performances de réjection de chaleur vers l'espace doivent être maximales, en particulier pour les satellites de télécommunications.

La plus grande partie de ces réflecteurs solaires optiques sont installés, lors de la fabrication initiale de panneaux du satellite, sur une large part de la surface de ceux-ci . Pour avoir une capacité de réjection de chaleur maximale, il est souvent nécessaire de rajouter des réflecteurs solaires optiques en fin d'intégration du satellite.

Cependant, le procédé de collage des réflecteurs solaires optiques (OSR) sur les murs des satellites implique une mise en oeuvre en phase d'intégration complexe et imposant des contraintes planning importantes très pénalisantes en fin d'intégration d'un satellite.

On pourrait envisager d'utiliser de la peinture sur les murs du satellite, comme par exemple celles décrites dans les demandes de brevet FR 2 755 443 et EP 0 681 911, pour compléter le revêtement OSR mais cela présente les inconvénients suivants :
- L'application de peinture est longue (il faut appliquer un primaire d'accrochage, il faut ensuite appliquer huit couches de peinture...)
- Le temps de séchage de la peinture est long et implique des contraintes telles que l'impossibilité de mise ON des équipements internes satellite avant 24h, la réduction des possibilités de rotation du satellite durant ces 24h...
- Le procédé est polluant durant sa mise en oeuvre et des moyens de protections importants (masquages de zones environnantes...) doivent être installés.

### Exposé de l'invention

L'invention proposée consiste à remplacer ces réflecteurs solaires optiques par des pièces d'adhésif souple métallique peint en blanc.

L'invention vise à cet effet une pièce thermo-optique, pour application sur une face externe d'un mur dudit véhicule spatial, ladite pièce comprenant au moins une feuille, comportant sur une de ses faces une couche d'adhésif, et sur son autre face une couche de peinture dotée de propriétés, thermo-optiques et de souplesse, prédéterminées.

On entend par véhicule spatial un véhicule adapté à voyager en ambiance orbitale. La pièce thermo-optique, pour convenir à être utilisée sur une face externe de véhicule spatial, doit être compatible avec les conditions d'environnement régnant en ambiance orbitale ou spatiale : rayonnement solaire intense, températures variant typiquement entre -150 et+150°, vide poussé, le tout en respectant une durée de vie opérationnelle analogue à celle du satellite, c'est-à-dire plusieurs années.

On entend par face externe d'un mur de véhicule spatial une face orientée vers l'espace libre, par opposition à une face interne, orientée vers les équipements électroniques embarqués.

On entend par souplesse la capacité de la couche de matériau thermo-optique, une fois appliquée sur un support, à être manipulée et marouflée légèrement sans fissure ni décollement de la peinture.

Dans un mode préféré de réalisation, la feuille est réalisée en métal.

Avantageusement, la couche de matériau doté de propriétés prédéterminées thermo-optiques et de souplesse est une couche d'une peinture blanche.

La peinture blanche, de par ses bonnes propriétés thermo optiques, est un remplaçant intéressant des réflecteurs solaires optiques, même si elle fournit naturellement des performances dégradées par rapport à ceux-ci.

Préférentiellement, la feuille métallisée utilisé est constituée d'au moins une feuille d'aluminium, d'épaisseur comprise entre 20 et 60 microns (50 microns pour le matériau préféré, de type connu sous le nom commercial Chofoil - marque déposée-), de résistivité initiale de surface inférieure ou égale à 0.00200 ohm) Selon l'invention, la couche d'adhésif est de type acrylique sensible à la pression (adhésif de type PSA de l'anglais "Pressure Sensitive Adhesive"), présentant une épaisseur comprise entre 20 et 60 microns, et chargée de façon à être électriquement conductrice. De cette manière, le patch permet également d'assurer une continuité électrique entre diverses parties ou surfaces d'un mur externe de satellite. La résistivité initiale transversale de la couche d'adhésif et de la feuille métallisée est typiquement inférieure ou égale à <= 0.0350 ohm.

Encore plus particulièrement, la pièce comporte une couche auto-adhésive de type connu sous le nom commercial de Cho-Foil CCJ (marque déposée), comportant sur sa face opposée à la face adhésive une couche de peinture blanche.

Le matériau Cho-Foil FCJ (marque déposée) est usuellement utilisé comme matériau destiné à assurer une continuité électrique entre des pièces situées à l'intérieur d'un satellite (mise à la terre, câbles etc.), ou à former un blindage électromagnétique destiné à protéger des pièces électroniques. Ce matériau est adapté à supporter des températures comprises entre -60° et +100°C, ce qui le rend compatible avec une utilisation en environnement spatial.

Alternativement, la feuille est constituée d'au moins une feuille de film de polyimide, par exemple de type connu sous le nom commercial de kapton (marque déposée).

Dans un mode de réalisation préférée, la peinture blanche utilisée est de type composé peinture de base silicone avec un pigment type oxyde de zinc, par exemple connue sous le nom commercial SG122FD (marque déposée).

L'invention vise également un procédé de mise en place sur la face externe d'un mur de véhicule spatial, d'une pièce thermo-optique, comprenant des étapes suivantes :
110 - obtention d'un rouleau de matériau constitué d'une feuille métallique comportant une couche d'adhésif conducteur,
200 - application d'au moins une couche de peinture blanche ou noire sur au moins une partie de la face non adhésive de ce rouleau,
300 - polymérisation de la peinture,
400 - préparation de surface du mur avant collage,
500 - découpe dans la pièce peinte d'un patch aux dimensions de la zone d'application prévue,
600 - application du patch sur la face externe du mur du véhicule spatial.

Dans une variante de mise en oeuvre, le procédé comporte des étapes de :
110 - obtention d'un rouleau de matériau constitué d'une feuille métallique comportant une couche d'adhésif conducteur,
150 - Matriçage et découpe du rouleau en patch carré de quatre centimètres x quatre centimètres (dimensions classiques d'un réflecteur solaire optique).
200 - application d'au moins une couche de peinture blanche sur au moins un patch,
300 - polymérisation de la peinture,
400 - préparation de surface du mur avant collage,
600 - application du patch sur le mur du véhicule spatial.

Le matriçage se fait ici avant l'application de la peinture, ce qui évite d'abimer la couche de peinture une fois séchée.

La caractéristique principale de ce procédé est de ne pas appliquer la peinture directement sur le mur du satellite mais sur un support auto adhésif.

L'invention vise, sous un autre aspect, un véhicule spatial comportant au moins une pièce thermo-optique tel qu'exposée, appliquée sur une face externe d'un mur dudit satellite.

Sous encore un autre aspect, l'invention vise un véhicule spatial comportant au moins une pièce thermo-optique mise en place selon un procédé selon l'invention.

### Présentation des figures

Les caractéristiques et avantages de l'invention seront mieux appréciés grâce à la description qui suit, description qui expose les caractéristiques de l'invention au travers d'un exemple non limitatif d'application.

La description s'appuie sur les figures annexées qui représentent :

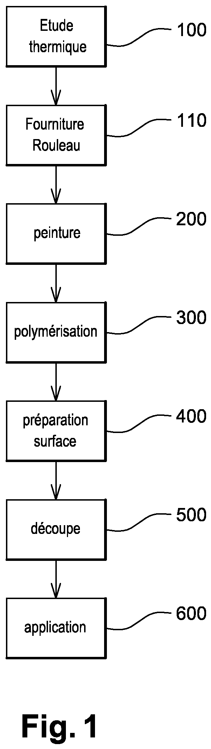

Figure 1 : un schéma des étapes de mise en oeuvre du procédé selon l'invention.

### Description détaillée d'un mode de réalisation de l'invention

Le procédé d'application de patchs formés de feuilles métalliques adhésives peintes en blanc, en remplacement de réflecteurs solaires optiques sur satellite, comporte des étapes suivantes (voir figure 1) :
100 - étude thermique pour un véhicule spatial préalablement choisi en fonction des conditions de fonctionnement et d'environnement prévu, et évaluation des réflecteurs solaires optiques susceptibles d'être remplacés par de la peinture blanche. Cette étude permet de vérifier que la substitution de réflecteurs solaires optiques OSR par des patchs selon l'invention est compatible avec les besoins du satellite. Il est à noter que cette substitution est réalisable dans un grand nombre de cas.
110 - obtention d'un rouleau de matériau constitué d'une feuille métallique comportant une couche d'adhésif conducteur,
200 - application de huit couches de peinture blanche sur la face non adhésive du rouleau métallique,
300 - polymérisation de la peinture (une semaine de séchage),
400 - préparation de surface du substrat (mur du satellite) avant collage, incluant par exemple un nettoyage à l'alcool,
500 - découpe d'un morceau de feuille métallique peinte comportant une couche d'adhésif conducteur, aux dimensions de la zone d'application prévue. Cette découpe peut se faire facilement au cutter ou au scalpel,
600 - application du morceau découpé sur le mur du satellite.

Dans ce mode de mise en oeuvre, on obtient des rouleaux de feuille métallique adhésive peint sans découpe ni matriçage, et on réalise la découpe selon les dimensions spécifiques, au moment de la pose du patch. Cette disposition est intéressante pour des pièces découpées à façon.

Dans une variante, la découpe et le matriçage se font avant l'application de la peinture, pour la fabrication des patchs. Un intérêt de cette disposition est de stresser le moins possible la couche peinte en évitant de la couper, et de gagner du temps avant la pose des pièces, les patchs étant prédécoupés à des dimensions standards.

En ce qui concerne le choix de la peinture, on choisit une peinture blanche très souple et pouvant être appliquée sur un substrat non rigide qui peut être amené à être découpé ou plié. Une peinture telle que la peinture blanche connue sous le nom commercial SG122FD (marque déposée) est utilisée dans la présente mise en oeuvre du dispositif.

En ce qui concerne le choix de la feuille métallique comportant une couche d'adhésif, il s'agit, dans la présente mise en oeuvre décrite à titre nullement limitatif, d'un matériau de type connu sous le nom commercial Chofoil (marque déposée). Celui-ci a été sélectionné car il est totalement conducteur (la base est une feuille d'aluminium et la masse adhésive est chargée de façon à être conductrice). Ceci permet un bon écoulement des charges. De plus, l'application de la peinture sur aluminium est connue et maitrisée.

Enfin, cet adhésif est bien adapté à un usage externe du satellite car il a une bonne tenue aux radiations. Dans le cas d'application à un satellite de télécommunications, la masse adhésive est protégée à la fois par la peinture et par la feuille d'aluminium ce qui réduit considérablement le niveau de dose reçu.

### Avantages

Dans un premier temps cette application est envisagée pour le remplacement de certains réflecteurs solaires optiques. Il s'agit alors d'installer plusieurs dizaines voire plusieurs centaines de pièces telles que décrites sur chaque satellite concerné, lors de la phase d'assemblage, intégration et test.

Dans un second temps, on peut envisager d'utiliser des pièces d'adhésif métallique peints en blanc ou en noir pour de nombreuses autres applications (réparation locale de peinture, enrubannage de guides d'ondes ou de torons de câble ou la nécessité de bonnes propriétés thermo optiques est démontrée...). Dans le cas de peinture en noir, il peut s'agir par exemple de peinture de type PNC (Peinture Noire Conductrice) : peinture noire silicone avec un pigment noir de carbone.

Ce procédé apporte une plus value pour tous les cas « d'urgence » ou de modifications tardives de design.

Les avantages de ce procédé sont les suivants :
- Facilité et rapidité de mise en oeuvre. Le gain de temps est très important comparé au collage standard d'un réflecteur solaire optique (préparation de la colle, du substrat, polymérisation de la colle). Le gain est également important par rapport à l'application directe de peinture sur les murs du satellite. En effet, la peinture doit généralement être appliquée en huit couches. Le dispositif décrit plus haut évite ainsi le temps important de séchage sur le satellite.
- Pas d'immobilisation du satellite durant cette opération.
- Possibilité de mise ON des équipements internes juste après collage des pièces.
- Possibilité de retouche de la peinture au pinceau si besoin.
- Application d'une pièce souple et donc non fragile. Il n'y a donc plus de risque de casse durant les opérations d'assemblage final du satellite, et il n'y a donc pas besoin d'envisager un procédé de décollement et de réparation.
- Possibilité de coller des pièces de formes variées sur des surfaces non planes (au dessus d'inserts du satellite etc.).
- Possibilité de ne plus boucher les inserts (on peut perforer la pièce de kapton au niveau de l'insert et éviter ainsi les problèmes dus au dégazage -"venting"-). Le fait de ne plus boucher les inserts induit un gain de temps et de masse relativement important.
- Pas de problème de mise à la masse (la pièce comportant un adhésif conducteur).
- Bonnes propriétés thermo optiques de la peinture blanche par rapport au collage de kapton ou de film métallisé auto-adhésif non peint.

## Revendications

1. Procédé de mise en place sur une face externe d'un mur de véhicule spatial, d'une pièce thermo-optique, **caractérisé en ce qu'**il comprend des étapes de :
110 - obtention d'un rouleau de matériau constitué d'une feuille métallique comportant une couche d'adhésif conducteur,
200 - application d'au moins une couche de peinture blanche ou noire sur au moins une partie de la face non adhésive de ce rouleau,
300 - polymérisation de la peinture,
400 - préparation de la surface du mur avant collage,
500 - découpe dans la partie peinte et polymérisée à l'étape 300, d'un patch aux dimensions de la zone d'application prévue, formant ainsi une pièce thermo-optique,
600 - application de la pièce thermo-optique sur la face externe du mur du véhicule spatial.

2. Procédé selon la revendication 1, **caractérisé en ce qu'**il comprend une étape de matriçage et découpe du rouleau obtenu à l'étape 110, en patchs carrés de dimensions classiques d'un réflecteur solaire optique.

3. Procédé selon l'une quelconque des revendications 1 à 2, **caractérisé en ce que** la peinture est blanche, de type composé peinture de base silicone avec un pigment type oxyde de zinc.

4. Procédé selon l'une quelconque des revendications 1 à 2, **caractérisé en ce que** la peinture est une peinture noire silicone avec un pigment noir de carbone.

5. Pièce thermo-optique pour application sur une face externe d'un mur d'un véhicule spatial, comportant au moins une feuille, comportant sur une de ses faces une couche de peinture dotée de propriétés thermo-optiques prédéterminées, **caractérisée en ce que** la feuille comporte sur son autre face une couche d'adhésif de type acrylique sensible à la pression, présentant une épaisseur comprise entre 20 et 60 microns, et chargée de façon à être électriquement conductrice.

6. Pièce thermo-optique, selon la revendication 5, **caractérisée en ce que** la feuille est constituée d'au moins une épaisseur de métal.

7. Pièce thermo-optique, selon l'une quelconque des revendications 5 à 6, **caractérisée en ce que** la couche de peinture dotée de propriétés thermo-optiques prédéterminées est une couche d'une peinture blanche.

8. Pièce thermo-optique, selon l'une quelconque des revendications 5 à 7, **caractérisée en ce que** la feuille est une feuille d'aluminium, d'épaisseur comprise entre 20 et 60 microns.

9. Pièce thermo-optique, selon l'une quelconque des revendications 5 à 8, **caractérisée en ce que** la résistivité initiale transversale de la couche d'adhésif et de la feuille est inférieure ou égale à <= 0.0350 ohm.

10. Pièce thermo-optique, selon l'une quelconque des revendications 5 à 9, **caractérisée en ce que** la peinture blanche utilisée est composée d'une matrice silicone chargée avec des pigments oxyde de zinc.

11. Pièce thermo-optique, selon l'une quelconque des revendications 5 à 10, **caractérisée en ce que** la feuille est constituée d'au moins une épaisseur de film de polyimide.

12. Véhicule spatial, **caractérisé en ce qu'**il comporte au moins une pièce thermo-optique mise en place selon un procédé conforme à l'une des revendications 1 à 4, appliquée sur une face externe d'un de ses murs.

## Patentansprüche

1. Verfahren zur Anbringung auf einer äußeren Seite einer Wand eines Raumfahrzeugs einer thermooptischen Platte, **dadurch gekennzeichnet, dass** es die folgenden Schritte umfasst:
110 - Erhalten einer Materialrolle, die aus einer Metallfolie besteht, die eine Schicht aus einem leitfähigen Klebstoff umfasst,
200 - Auftragen von mindestens einer Schicht weißer oder schwarzer Farbe auf mindestens einen Teil der nicht klebenden Seite dieser Rolle,
300 - Polymerisieren der Farbe,
400 - Vorbereiten der Oberfläche der Wand vor dem Kleben,
500 - Schneiden, in dem in Schritt 300 gestrichenen und polymerisierten Teil, eines Patchs mit den Abmessungen des vorgesehenen Aufbringungsbereichs, der so eine thermooptische Platte bildet,
600 - Auftragen der thermooptischen Platte auf die äußere Seite der Wand des Raumfahrzeugs.

2. Verfahren nach Anspruch 1, **dadurch gekennzeichnet, dass** es einen Schritt des Prägens und Schneidens der Rolle, erhalten in Schritt 110, in quadratische Patchs mit klassischen Abmessungen eines optischen Sonnenreflektors umfasst.

3. Verfahren nach einem der Ansprüche 1 bis 2, **dadurch gekennzeichnet, dass** die Farbe weiß ist, vom Typ zusammengesetzte Farbe auf der Basis von Silikon mit einem Pigment vom Typ Zinkoxid.

4. Verfahren nach einem der Ansprüche 1 bis 2, **dadurch gekennzeichnet, dass** die Farbe eine schwarze Silikonfarbe mit einem schwarzen Kohlenstoffpigment ist.

5. Thermooptische Platte zur Aufbringung auf eine äußere Seite einer Wand eines Raumfahrzeugs, umfassend mindestens eine Folie, umfassend auf einer ihrer Seiten eine Farbschicht, die mit vorbestimmten thermooptischen Eigenschaften dotiert ist, **dadurch gekennzeichnet, dass** die Folie auf ihrer anderen Seite eine druckempfindliche Klebstoffschicht vom Typ Acryl umfasst, die eine Dicke im Bereich zwischen 20 und 60 Mikrometer aufweist und derart geladen, dass sie elektrische leitfähig ist.

6. Thermooptische Platte nach Anspruch 5, **dadurch gekennzeichnet, dass** die Folie aus mindestens einer Metalldicke besteht.

7. Thermooptische Platte nach einem der Ansprüche 5 bis 6, **dadurch gekennzeichnet, dass** die Farbschicht, die mit vorbestimmten thermooptischen Eigenschaften dotiert ist, eine Schicht einer weißen Farbe ist.

8. Thermooptische Platte nach einem der Ansprüche 5 bis 7, **dadurch gekennzeichnet, dass** die Folie eine Aluminiumfolie mit einer Dicke im Bereich zwischen 20 und 60 Mikrometer ist.

9. Thermooptische Platte nach einem der Ansprüche 5 bis 8, **dadurch gekennzeichnet, dass** der anfängliche Durchschlagwiderstand der Klebstoffschicht und der Folie geringer als oder gleich wie a <= 0.0350 ohm ist.

10. Thermooptische Platte nach einem der Ansprüche 5 bis 9, **dadurch gekennzeichnet, dass** die verwendete weiße Farbe aus einer Silikonmatrix, geladen mit Zinkoxidpigmenten, zusammengesetzt ist.

11. Thermooptische Platte nach einem der Ansprüche 5 bis 10, **dadurch gekennzeichnet, dass** das Blatt aus mindestens einer Polyimidfilmdicke besteht.

12. Raumfahrzeug, **dadurch gekennzeichnet, dass** es mindestens eine thermooptische Platte umfasst, die gemäß einem Verfahren nach einem der Ansprüche 1 bis 4 angebracht ist, aufgetragen auf eine äußere Seite einer seiner Wände.

## Claims

1. Method for installing on an outer face of a wall of a space vehicle, a thermal-optical part, **characterised in that** it comprises the steps of:
110 - obtaining a roll of material comprised of a metal sheet including a layer of conductive adhesive,
200 - application of at least one coat of white or black paint on at least a portion of the non-adhesive face of this roll,
300 - polymerisation of the paint,
400 - preparation of the surface of the wall before gluing,
500 - cutting in the painted and polymerised portion in the step 300, of a patch at the dimensions of the application zone provided, as such forming a thermal-optical part,
600 - application of the thermal-optical part on the outer face of the wall of the space vehicle.

2. Method according to claim 1, **characterised in that** it comprises a step of die forging and cutting the roll obtained in the step 110, into square patches of conventional dimensions of an optical solar reflector.

3. Method according to any of claims 1 to 2, **characterised in that** the paint is white, of the silicone base paint compound type with a pigment of the zinc oxide type.

4. Method according to any of claims 1 to 2, **characterised in that** the paint is a silicone black paint with a carbon black pigment.

5. Thermal-optical part for application on an outer face of a wall of a space vehicle, comprising at least one sheet, comprising on one of its faces a coat of paint provided with predetermined thermal-optical properties, **characterised in that** the sheet comprises on its other face an adhesive layer of the acrylic type sensitive to pressure, having a thickness between 20 and 60 microns, and charged in such a way as to be electrically conductive.

6. Thermal-optical part, according to claim 5, **characterised in that** the sheet is comprised of at least one thickness of metal.

7. Thermal-optical part, according to any of claims 5 to 6, **characterised in that** the coat of paint provided with predetermined thermal-optical properties is a coat of white paint.

8. Thermal-optical part, according to any of claims 5 to 7, **characterised in that** the sheet is a sheet of aluminium, with a thickness between 20 and 60 microns.

9. Thermal-optical part, according to any of claims 5 to 8, **characterised in that** the initial volume resistivity of the adhesive layer and of the sheet is less than or equal to <= 0.0350 ohm.

10. Thermal-optical part, according to any of claims 5 to 9, **characterised in that** the white paint used is comprised of a silicone die loaded with zinc oxide pigments.

11. Thermal-optical part, according to any of claims 5 to 10, **characterised in that** the sheet is comprised of at least one thickness of polyimide film.

12. Space vehicle, **characterised in that** it comprises at least one thermal-optical part installed according to a method in accordance with one of claims 1 to 4, applied on an outer face of one of its walls.
